# EUROPEAN PATENT SPECIFICATION

(11) **EP 1 082 720 B1**
(45) Date of publication and mention of the grant of the patent: **04.04.2007**
(21) Application number: 99930035.3
(22) Date of filing: 28.05.1999
(51) Int. Cl.: G11B 7/26, G11B 23/00

(54) **MANUFACTURING METHOD FOR A RAW MATRIX OF AN OPTICAL STORAGE MEDIUM**
VERFAHREN ZUR HERSTELLUNG EINER ROHMATRIZE FÜR EIN OPTISCHES SPEICHERMEDIUM
PROCEDE DE PRODUCTION D'UNE MATRICE BRUTE DESTINEE A UN SUPPORT DE STOCKAGE OPTIQUE

(30) Priority: 29.05.1998 SE 9801934
(43) Date of publication of application: 14.03.2001
(73) Proprietor: Obducat AB, 201 25 Malmö (SE)
(72) Inventor: OLSSON, Lennart, S-216 21 Malmö (SE)
(74) Representative: Lindberg, Olle Nils Olof
(86) International application number: PCT/SE1999/000910
(87) International publication number: WO 1999/063535

(56) References cited:
- EP-A2- 0 405 568
- WO-A1-96/04652
- US-A- 4 354 988
- US-A- 4 954 065
- PATENT ABSTRACTS OF JAPAN & JP 60 177 452 A (DAICEL KAGAKU KOGYO K.K.) 11 September 1985

## Description

The present invention relates to a method of manufacturing a matrix for making optical storage media.

When making optical storage media, such as compact disks, use is made of what is referred to as matrixes as a form for the information-carrying structure of the storage medium. The matrix constitutes one half of a mould for moulding said storage media. A matrix consists of a circular, planar plate of metal, in which a central opening is formed. The opening is used in the making of storage media.

In the methods that are traditionally used for making optical storage media, matrixes of metal are manufactured one by one by the matrixes being built up on a substrate provided with a pattern. This is time-consuming and costly work which comprises a plurality of steps of manufacture and which places high demands on advanced equipment for manufacturing the matrixes.

Therefore an object of the present invention is to provide an improved method of manufacturing matrixes for making optical storage media.

A specific object is to provide a rational method of manufacturing matrixes.

A special object is to ensure a high quality in the manufacture of matrixes.

According to the invention, these and other objects that will be apparent from the following description are now achieved by a method according to appended claim 1. Preferred embodiments are defined in the dependent claims.

The invention is based on the idea of manufacturing in a first step a "raw matrix", which in a subsequent step is provided with an inscription by working the surface of the raw matrix.

According to a first aspect of the invention, a plate-shaped matrix body is formed, on which a resist coating, such as a photoresist coating, is applied on one side. This is achieved according to the invention by spinning a polymer over the body starting from a central portion of the body.

By spinning the polymer from the central portion, a uniform resist coating can easily be obtained over the entire plate-shaped body. Any irregularities are limited to the central portion.

After the forming of the resist coating, a central opening is formed in the body by removing the central portion, preferably by punching the central portion of the body. As a result, the entire resist coating will be uniform from the edge of the opening radially outwards. Thus the matrix can be provided with a high-quality inscription up to the edge of the opening.

By spinning, in accordance with the inventive concept, the resist coating from a central position and only then punching a central opening, a higher quality, a larger writing surface and lower manufacturing costs will be obtained than in the case where the resist coatings are spun after the opening has been punched.

The opening formed after removal of the central portion preferably constitutes the final opening which is used in the making of optical storage media. It is preferred for the matrix body to cover the entire central portion when applying the resist since the resist material can thus be spun from a single central position. However, the invention is not limited in this respect. It may in some cases be advantageous to form a smaller opening in the body and apply the resist starting from a central area round the smaller opening, whereupon the central area is removed. Also this embodiment is included in the inventive concept as will be expressed in the appended claims.

In a preferred embodiment there is formed in a subsequent step an information-carrying inscription in the resist coating by an irradiation (exposure) and developing process in some prior art manner, whereupon a corresponding structure is formed in the matrix body by an etching or application process.

According to a second aspect of the invention, a blank for a matrix is provided in a first step, which has a plate-shaped matrix body extending from a central portion to a circular peripheral line, and a resist coating extending radially outwards from the central portion of the body. The central portion is removed in a subsequent step. No final central opening has thus yet been formed in the matrix body. In a particularly preferred embodiment, the blank has no opening at all inside the peripheral line in the first step.

According to a third aspect of the invention, a raw matrix with a plate-shaped matrix body is provided in a first stop, which has a central opening and a resist coating extending from the peripheral edge of the central opening and having a uniform thickness. The raw matrix, which in itself constitutes an intermediate product in the manufacture of a completed matrix, has thus been manufactured by forming a central opening in the matrix blank described above. Then no further change or working of the inner diameter or outer diameter is made after exposure or forming of structure, for instance by an etching, or application process.

A preferred embodiment of the invention will now be described for the purpose of exemplification.

A matrix body in the form of a circular disk of nickel is formed. A suitable volume of a suitable resist material is placed in the centre of the disk, whereupon the disk is rotated sc that the resist material is spun to a uniform layer over the matrix body which then constitutes a blank for a matrix. Subsequently, the central portion of the disk is punched, thereby forming a raw matrix. The raw matrix undergoes lithographic processing, in which an information-carrying pattern is exposed to radiation and developed according to prior art methods, so that the matrix body is uncovered in selected surface portions in a pattern corresponding to the information with which the matrix is to be provided. Then a structure is etched into the matrix body in the uncovered surface portions. Finally the rest of the resist coating is removed, thereby forming a completed matrix with an information-carrying surface structure. Optionally the surface structure is given a protective treatment before the matrix is ready for use.

## Claims

1. A method of manufacturing a matrix for making optical storage media, **characterised by** the steps of
forming a plate-shaped matrix body,
applying a resist coating on one side of the body by spinning a polymer over the body starting from a central portion of the body, and
forming, after said step of application, a central opening in the body provided with a resist coating by removing the central portion, preferably by punching the central portion of the body.

2. A method as claimed in claim 1, wherein said opening is formed such that the resist coating extends from a peripheral edge which defines said opening.

3. A method as claimed in claim 1 or 2, wherein the central opening is formed in the body before the resist coating is provided with an information-carrying inscription.

4. A method as claimed in claim 3, wherein the information-carrying inscription is formed in the resist coating by a subsequent exposure and developing process.

5. A method as claimed in claim 4, wherein a structure corresponding to the inscription in the resist coating is formed in the matrix body by an etching or application process.

## Patentansprüche

1. Verfahren zur Fertigung einer Matrize zum Herstellen von optischen Speichermedien, **gekennzeichnet durch** die Verfahrensschritte:
Bilden eines plattenförmigen Matrizenkörpers,
Auftragen einer Abdeckbeschichtung auf einer Seite des Körpers **durch** Verspinnen eines Polymers über dem Körper, beginnend von einem zentralen Abschnitt des Körpers, und
nach diesem Anwendungsschritt Bilden einer zentralen Öffnung in dem mit einer Deckungsbeschichtung versehenen Körper **durch** Entfernen des zentralen Abschnitts, vorzugsweise **durch** Ausstanzen des zentralen Abschnitts des Körpers.

2. Verfahren nach Anspruch 1, wobei die Öffnung so ausgebildet ist, dass sich die Abdeckbeschichtung von einer Umfangskante erstreckt, die die Öffnung abgrenzt.

3. Verfahren nach Anspruch 1 oder 2, wobei die zentrale Öffnung in dem Körper gebildet wird, bevor die Abdeckbeschichtung mit einer eine Information tragenden Beschichtung versehen wird.

4. Verfahren nach Anspruch 3, wobei die eine Information tragende Beschriftung in der Abdeckbeschichtung durch einen nachfolgenden Expositions- und Entwicklungsprozess gebildet wird.

5. Verfahren nach Anspruch 4, wobei eine der Beschriftung in der Abdeckbeschichtung entsprechenden Struktur in dem Matrizenkörper durch einen Ätz- oder Anwendungsprozess gebildet wird.

## Revendications

1. Procédé de fabrication d'une matrice pour la production de supports de stockage optiques, **caractérisé par** les étapes de :
préparation d'un corps de matrice en forme de plaque,
application d'un revêtement résistant sur une face du corps par rotation rapide d'un polymère sur le corps en partant d'une région centrale du corps, et
formation, après la dite étape d'application, d'un trou central dans le corps pourvu du revêtement résistant, par enlèvement de la région centrale, de préférence par poinçonnage de la région centrale du corps.

2. Procédé selon la revendication 1, dans lequel le dit trou est formé de sorte que le revêtement résistant s'étende à partir d'un bord périphérique qui définit le dit trou.

3. Procédé selon la revendication 1 ou 2, dans lequel le trou central est formé dans le corps avant que le revêtement résistant soit pourvu d'une inscription portant des informations.

4. Procédé selon la revendication 3, dans lequel l'inscription portant des informations est formée dans le revêtement résistant par un traitement suivant d'exposition et de développement.

5. Procédé selon la revendication 4, dans lequel une structure correspondant à l'inscription dans le revêtement résistant est formée dans le corps de matrice par un traitement de gravure ou d'application.
